(19)

**Europäisches Patentamt**
**European Patent Office**
**Office européen des brevets**

(11) **EP 4 316 718 B1**

(12) **EUROPEAN PATENT SPECIFICATION**

(45) Date of publication and mention
of the grant of the patent:
**31.12.2025 Bulletin 2026/01**

(21) Application number: **22810928.6**

(22) Date of filing: **14.03.2022**

(51) International Patent Classification (IPC):
**B23K 11/00** *(2006.01)*  **B23K 11/11** *(2006.01)*
**B23K 11/16** *(2006.01)*  **B23K 11/24** *(2006.01)*
**C21D 9/46** *(2006.01)*  **C22C 38/00** *(2006.01)*
**C22C 38/14** *(2006.01)*  **C22C 38/60** *(2006.01)*
**B23K 11/34** *(2006.01)*  **B23K 101/00** *(2006.01)*
**C21D 8/00** *(2006.01)*  **C22C 38/02** *(2006.01)*
**C22C 38/04** *(2006.01)*  **C22C 38/06** *(2006.01)*
**C22C 38/08** *(2006.01)*  **C22C 38/12** *(2006.01)*
**C22C 38/16** *(2006.01)*  **C22C 38/22** *(2006.01)*
**C22C 38/32** *(2006.01)*  **C22C 38/34** *(2006.01)*
**C22C 38/38** *(2006.01)*

(52) Cooperative Patent Classification (CPC):
**C22C 38/02; B23K 11/34; C21D 8/005;**
**C22C 38/002; C22C 38/004; C22C 38/04;**
**C22C 38/06; C22C 38/08; C22C 38/12;**
**C22C 38/14; C22C 38/16; C22C 38/22;**
**C22C 38/32; C22C 38/34; C22C 38/38;** (Cont.)

(86) International application number:
**PCT/JP2022/011157**

(87) International publication number:
**WO 2022/249650 (01.12.2022 Gazette 2022/48)**

(54) **AUTOMOTIVE MEMBER AND RESISTANCE-SPOT-WELDING METHOD THEREFOR**

AUTOMOBILELEMENT UND WIDERSTANDSPUNKTSCHWEISSVERFAHREN DAFÜR

ÉLÉMENT AUTOMOBILE ET PROCÉDÉ DE SOUDAGE PAR POINTS PAR RÉSISTANCE POUR CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.05.2021 JP 2021088099**

(43) Date of publication of application:
**07.02.2024 Bulletin 2024/06**

(73) Proprietor: **JFE Steel Corporation**
**Tokyo 100-0011 (JP)**

(72) Inventors:
• **TAKASHIMA, Katsutoshi**
**Tokyo 100-0011 (JP)**

• **ENDO, Reiko**
**Tokyo 100-0011 (JP)**
• **YANG, Lingling**
**Tokyo 100-0011 (JP)**
• **MATSUDA, Hiroshi**
**Tokyo 100-0011 (JP)**

(74) Representative: **Haseltine Lake Kempner LLP**
**One Portwall Square**
**Portwall Lane**
**Bristol BS1 6BH (GB)**

(56) References cited:
**WO-A1-2020/240961     JP-A- 2013 103 273**
**JP-A- 2014 180 698     JP-A- 2020 040 122**
**JP-B2- 5 043 236     JP-B2- 6 558 443**
**US-A1- 2016 067 814     US-A1- 2018 298 462**

**(Cont. next page)**

(52) Cooperative Patent Classification (CPC): (Cont.)
     **C22C 38/60;** B23K 11/11; B23K 2101/006;
     C21D 2211/001; C21D 2211/005; C21D 2211/008

## EP 4 316 718 B1

**Description**

Technical Field

The present invention relates to an automotive member that includes a resistance spot weld formed by resistance-spot-welding a plurality of steel sheets including at least one high strength steel sheet and that is suitable particularly for members of structural components of automobiles etc. and also relates to a resistance spot welding method for the automotive member.

Background Art

In recent years, increasing environmental concerns have led to stringent $CO_2$ emission regulations. One challenge in the field of automobiles is to reduce the weight of vehicle bodies for the purpose of improving fuel economy. Therefore, automotive parts are being reduced in thickness by using high strength steel sheets, and steel sheets having a tensile strength (TS) of 1400 MPa or more are being increasingly used.

In the assembly of an automobile, press-formed parts produced by press forming are often combined together and resistance-spot-welded (spot-welded) together to produce one automotive part, from the viewpoint of cost and production efficiency. Therefore, as the strength of steel sheets (steel sheets for welding) increases, there is a need for improvement in the strength of the weld.

Generally, the tensile strength of the joint of a weld increases in proportion to an increase in the tensile strength of the steel sheets for welding (i.e., the base metal). The increasing "tensile strength of the joint" is the tensile shear strength of the joint that is measured under a tensile load applied in a shear direction (which is hereinafter referred to as "tensile shear strength"). However, the cross tensile strength of the joint in the weld decreases when the tensile strength of the base metal exceeds 1400 MPa, and this poses a problem in that the morphology of fracture is interfacial fracture.

Moreover, as the tensile strength of the base metal increases, it is feared that hydrogen entering from the use environment will cause delayed fracture particularly in the resistance spot weld.

Examples of a conventional technique for improving the strength of the weld to prevent the above phenomenon include techniques in Patent Literature 1 and Patent Literature 2. Patent Literature 1 discloses a technique for ensuring the strength of the weld by welding high strength steel sheets having a steel composition with controlled amounts of C etc. and changing the welding conditions. Patent Literature 2 discloses a technique for improving the delayed fracture resistance of the weld by performing the step of repeatedly increasing and decreasing the welding force applied to the weld after the formation of the nugget while a current is applied to the weld.

Furthermore, Patent Literature 3 discloses a spot welding method for obtaining a spot welded joint, the method including a spot welding with two-stage welding, setting a ratio ($I_2/I_1$) of a current $I_2$ of a second welding process to a current $I_1$ of a first welding process to from 0.5 to 0.8, setting a time tc of a cooling process within a range of from 0.8×tmin to 2.5×tmin wherein tmin is calculated using the equation ($0.2 \times H^2$) according to a sheet thickness H of the steel sheets, setting an welding time t2 of a second welding process within a range of from 0.7×tmin to 2.5×tmin, and setting a pressure from the cooling process onward to greater than a pressure until the first welding process.

Citation List

Patent Literature

PTL 1: Japanese Patent No. 6194765
PTL 2: Japanese Patent No. 6558443
PTL 3: US2016067814

Summary of Invention

Technical Problem

However, in the technique described in Patent Literature 1, the amounts of C, P, S, etc. added are specified such that the equivalent carbon content falls within a prescribed range. Therefore, the material of the high strength steel sheets used as the base metal is limited, and this makes it difficult to ensure high ductility required for steel sheets for automobiles. Moreover, reducing the amount of P and the amount of S causes an increase in steelmaking cost.

In the technique described in Patent Literature 2, the tensile residual stress around the weld is reduced in order to improve the strength of the weld, and this results in a reduction in the cross tensile strength of the joint.

There is a need for a resistance spot welded member having a resistance spot weld having improved cross tensile strength and improved delayed fracture resistance even when steel sheets (which are high strength steel sheets) having a tensile strength of 1400 MPa or more are used as steel sheets for welding to obtain the resistance spot welded member.

The present invention has been made in view of the foregoing problems, and it is an object to provide an automotive member having a resistance spot weld that is formed by resistance-spot-welding a plurality of steel sheets including at least one high strength steel sheet and that has excellent cross tensile strength and excellent delayed fracture resistance and to provide a resistance spot welding method for the automotive member.

Solution to Problem

In view of the foregoing circumstances, the inventors have conducted extensive studies. As a result of the studies, the inventors have found a way to improve the cross tensile strength and delayed fracture resistance of a resistance spot weld in an automotive member including, as a steel sheet for welding, a steel sheet (i.e., high strength steel sheet) having a tensile strength of 1400 MPa or more.

Specifically, the inventors have found the following. In a region extending from the edge of a nugget of a resistance spot weld to a heat-affected zone, volume fractions in the microstructure of the resistance spot weld are controlled to specific ratios, and the crystal grains in the microstructure are reduced in size to form fine carbides in the microstructure. In this manner, the resistance spot weld after resistance spot welding has both good cross tensile strength and good delayed fracture resistance.

Specifically, in resistance spot welding, when the steel chemical composition of the base metal has a high equivalent carbon content in order to ensure the tensile strength of the base metal, the toughness of the nugget formed is reduced. In this case, cracks propagate through the nugget in a cross tensile test, and the nugget fractures as if it peels off. Therefore, the cross tensile strength decreases significantly.

Accordingly, in the present invention, after the formation of a nugget on a steel sheet faying surface by primary energization in resistance spot welding, a region extending from the edge of the nugget to the heat-affected zone is subjected to post-heat treatment to change the microstructure of the weld. The inventors have found that, in this case, cracks do not propagate through the nugget during the cross tensile test and that ductile fracture occurs in the heat-affected zone, so that the cross tensile strength increases.

Moreover, as for the delayed fracture, when fine Nb-based carbides and/or fine Ti-based carbides are dispersed in the above-described region extending from the edge of the nugget to the heat-affected zone, the grain diameter at the edge of the nugget decreases. The inventors have also found that, since the fine Nb-based carbides and/or the fine Ti-based carbides serve as hydrogen trapping sites, hydrogen embrittlement is prevented and that the toughness is improved through crystal grain refinement, so that the delayed fracture resistance is improved significantly.

The above-described fine carbides (Nb-based carbides and Ti-based carbides) also have an influence on the strength of the heat-affected zone. If the amount of the precipitated fine carbides is small, the degree of softening of the heat-affected zone increases. In this case, the cross tensile strength can only be increased up to the strength of the heat-affected zone. Specifically, the inventors have found that, in the present invention, by appropriately controlling the amount of the precipitated fine carbides, the fine carbides can also contribute to an improvement in the cross tensile strength.

The present invention is defined by the independent claims. Advantageous embodiments are described in dependent claims. The present invention is based on the above findings and summarized as follows.

The "good cross tensile strength" in the invention means that the cross tensile strength based on a cross tensile test (JIS Z 3137) performed using a method described later in Examples is 7.0 kN or more.

The "good delayed fracture resistance" in the invention means as follows. As described later in Examples, the obtained welded joint is left to stand in air at room temperature (25°C) for 24 hours and immersed in a hydrochloric acid solution (pH = 2.5) for 96 hours, and then the presence or absence of delayed fracture is checked. When no delayed fracture is found after immersion, the delayed fracture resistance is rated good.

Advantageous Effects of Invention

In the present invention, the automotive member including the resistance spot weld formed by resistance-spot-welding a plurality of steel sheets including at least one high strength steel sheet has good cross tensile strength and good delayed fracture resistance.

Brief Description of Drawings

[Fig. 1] Fig. 1 is a cross-sectional view schematically showing a resistance spot weld and the periphery thereof in an automotive member in one embodiment of the invention.

[Fig. 2] Fig. 2 is a graph showing an exemplary energization pattern in a first embodiment of the resistance spot welding method of the invention.

[Fig. 3] Fig. 3 is a graph showing an exemplary energization pattern in a second embodiment of the resistance spot welding method of the invention.

[Fig. 4] Fig. 4 is a graph showing an exemplary energization pattern in a third embodiment of the resistance spot welding method of the invention.

Description of Embodiments

The present invention will next be specifically described. However, the invention is not limited to the following embodiments.

[Automotive member]

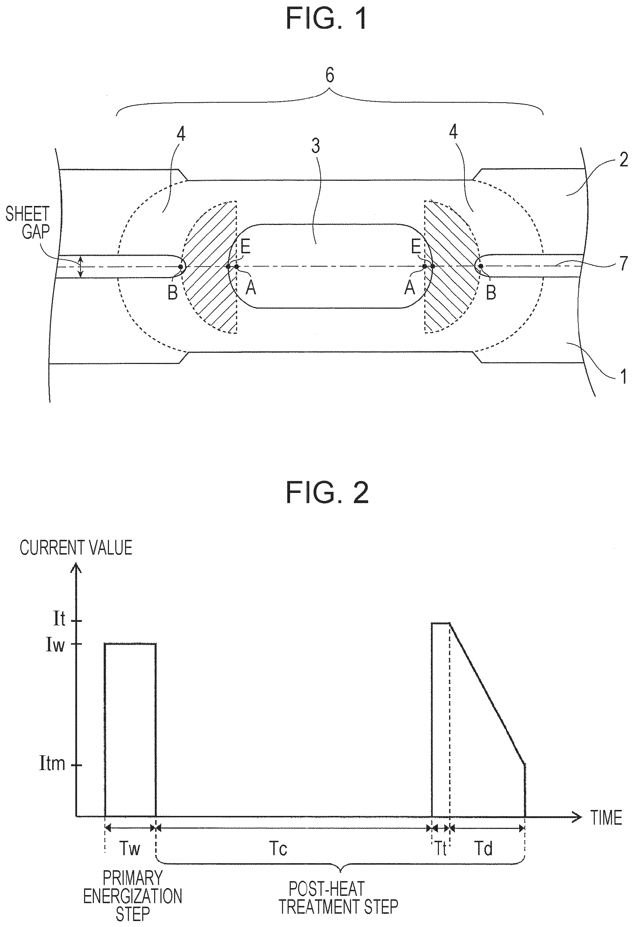

Referring first to Fig. 1, the automotive member of the invention will be described. Fig. 1 shows an exemplary cross-sectional view of a resistance spot weld 6 and the periphery thereof in the automotive member of the invention, the cross-sectional view being taken in the thickness direction of the automotive member.

The invention is an automotive member having a resistance spot weld formed by resistance-spot-welding a plurality of stacked steel sheets. The stacked steel sheets include at least one high strength steel sheet described later. No particular limitation is imposed on the number of stacked steel sheets, so long as two or more steel sheets are stacked. No particular limitation is imposed on the upper limit of the number of steel sheets, and the number of steel sheets is preferably 4 or less.

The example shown in Fig. 1 is the automotive member formed by welding two stacked steel sheets, and the high strength steel sheet is applied to a steel sheet 1 disposed on the lower side and/or a steel sheet 2 disposed on the upper side. As described later, the high strength steel sheet may include a coated layer. However, the illustration of the coated layer is omitted in Fig. 1. The resistance spot weld 6 having a microstructure described below is formed on a steel sheet faying surface (faying surface) 7 of the steel sheets 1 and 2.

[Microstructure of resistance spot weld]

The microstructure of the resistance spot weld of the automotive member of the invention will be described in detail.

As shown in Fig. 1, the resistance spot weld 6 of the automotive member (which is hereinafter referred to as the "weld") includes a nugget 3 and a heat-affected zone (HAZ) 4.

The inventors have produced an automotive member including a weld 6 formed by resistance-spot-welding a plurality of steel sheets including at least one high strength steel sheet described later and carefully examined a region extending from the vicinity of the edge of a nugget 3 of the weld 6 to a heat-affected zone 4. As a result of the examination, the inventors have found that the automotive member can have both good cross tensile strength and good delayed fracture resistance by (i) controlling volume fractions in the microstructure in a specific region extending from the vicinity of the edge of the nugget 3 to the heat-affected zone 4 to specific ratios and (ii) generating fine carbides in the specific region extending from the vicinity of the edge of the nugget 3 to the heat-affected zone 4 such that the carbides are precipitated in a specific amount.

In the present invention, as described above in (i), in the specific region extending from the vicinity of the edge of the nugget to the heat-affected zone, the volume fractions of structures contained in the microstructure of the weld are specified. The "volume fraction" of a structure described above is the ratio of this structure to the total volume of the structures in the entire measurement range.

Specifically, as shown in Fig. 1, the intersection of the outer edge of the nugget 3 and the faying surface 7 is denoted as a nugget edge E. A position 50 $\mu$m from the nugget edge E along the faying surface 7 toward the center of the nugget 3 is denoted as a point A, and a position 200 $\mu$m from the nugget edge E along the faying surface 7 toward the heat-affected zone 4 is denoted as a point B. In a region extending from the point A to the point B in the weld 6 (a diagonally shaded region shown in Fig. 1), i.e., a region from the point A to the point B, the overall microstructure of the nugget 3 and the heat-affected zone 4 is a composite microstructure containing ferrite at a volume fraction of 1 to 30%, martensite at a volume fraction of 1 to 50%, and tempered martensite at a volume fraction of 20% or more.

As shown in Fig. 1, "the region from the point A to the point B" is a region surrounded by a straight line perpendicular to the faying surface 7 at the point A and an arc passing through the point B with the center at the point A.

Ferrite: 1 to 30% by volume fraction

If ferrite is formed at a volume fraction of more than 30%, the nugget edge or the heat-affected zone is softened, and therefore the strength of the nugget edge or the heat-affected zone is not improved. In this case, the target cross tensile strength of the invention cannot be obtained. Therefore, the volume fraction of ferrite is set to 30% or less. The volume fraction of ferrite is preferably 25% or less and more preferably 24% or less. If the volume fraction of ferrite is less than 1%, cracks extending along prior-austenite grain boundaries are generated when hydrogen enters the steel, causing a reduction in the delayed fracture resistance. Therefore, the volume fraction of ferrite is 1% or more. The volume fraction of ferrite is preferably 3% or more and more preferably 4% or more.

Martensite: 1 to 50% by volume fraction

To ensure good cross tensile strength, the volume fraction of martensite needs to be 1% or more. The volume fraction of martensite is preferably 5% or more, more preferably 10% or more, and still more preferably 20% or more. If the volume fraction of martensite exceeds 50%, sensitivity to hydrogen intrusion increases, and the delayed fracture resistance deteriorates. Therefore, the volume fraction of martensite is set to 50% or less. The volume fraction of martensite is preferably 45% or less and more preferably 40% or less. The "martensite" used herein is martensite generated when austenite generated in a post-heat treatment step described later is cooled to room temperature.

Tempered martensite: 20% or more by volume fraction

To ensure good cross tensile strength and good delayed fracture resistance, the volume fraction of tempered martensite needs to be 20% or more. If the volume fraction of tempered martensite is less than 20%, the relative amount of ferrite and martensite is large, so that one or both of the cross tensile strength and the delayed fracture resistance deteriorate. The volume fraction of tempered martensite is preferably 25% or more, more preferably 30% or more, and still more preferably 40% or more. No particular limitation is imposed on the upper limit of tempered martensite. From the viewpoint of the cross tensile strength, the volume fraction of tempered martensite is preferably 85% or less, more preferably 80% or less, still more preferably 75% or less, and yet more preferably 70% or less.

In the microstructure of the weld, it is important that, in addition to the above features, the amount of precipitated fine carbides (Nb-based precipitate grains and Ti-based precipitate grains) be specified as described above in (ii).

Specifically, as shown in Fig. 1, in the region from the point A to the point B in the weld 6 (the diagonally shaded region in Fig. 1), the average number density of Nb-based precipitate grains having a grain diameter less than 0.09 $\mu$m and Ti-based precipitate grains having a grain diameter less than 0.09 $\mu$m is equal to or more than 10 grains per 100 $\mu$m$^2$ in a sheet cross section.

If the grain diameter of the Nb-based precipitate grains and the grain diameter of the Ti-based precipitate grains are each 0.09 $\mu$m or more, the surface area of hydrogen trapping sites is small, so that the delayed fracture resistance deteriorates. When the average number density of the Nb-based precipitate grains having a grain diameter less than 0.09 $\mu$m and the Ti-based precipitate grains having a grain diameter less than 0.09 $\mu$m is equal to or more than 10 grains per 100 $\mu$m$^2$ in a sheet cross section, the cross tensile strength and the delayed fracture resistance are improved.

If the average number density of the fine carbides per 100 $\mu$m$^2$ in a sheet cross section is less than 10 grains, the hardness of the softened portion (the vicinity of the edge of the nugget after the post-heat treatment step) cannot be maintained at a sufficient level. Therefore, not only does the cross tensile strength decrease, but also the delayed fracture resistance deteriorates because hydrogen trapping sites are not present. The average number density of the fine carbides per 100 $\mu$m$^2$ in a sheet cross section is preferably 20 grains or more, more preferably 30 grains or more, and still more preferably 35 grains or more. The upper limit of the average number density of the fine carbides per 100 $\mu$m$^2$ in a sheet cross section is not particularly specified. From the viewpoint of the cross tensile strength, the average number density is preferably 500 grains or less. The average number density is more preferably 480 grains or less, more preferably 350 grains or less, and still more preferably 150 grains or less.

In the present invention, in addition to ferrite, martensite, and tempered martensite described above, bainite, retained austenite, and pearlite may be formed in the microstructure in the region from the point A to the point B in the weld **6**. Even in this case, when the above-described volume fractions of ferrite, martensite, and tempered martensite and the above-described distribution state of the Nb-based precipitate grains and Ti-based precipitate grains are satisfied, the object of the invention can be achieved. However, when one or two or more of bainite, retained austenite, and pearlite are formed as remaining structures, the volume fraction of bainite is 10% or less (including 0%), the volume fraction of retained austenite is 10% or less (including 0%), and the volume fraction of pearlite is 3% or less (including 0%). The total volume fraction of these remaining structures is 23% or less (including 0%).

In the present invention, the structures described above, the grain diameters of the Nb-based precipitate grains and Ti-based precipitate grains, and their average number density can be measured by methods described later in Examples.

Although not illustrated, when, for example, three or more steel sheets are stacked together, the weld 6 is formed so as to include all the steel sheets. In the present invention, when the sheet set includes three or more stacked steel sheets, a steel sheet disposed between the lowermost steel sheet and the uppermost steel sheet is referred to as an "intermediate steel sheet." In this case, two or more steel sheet faying surfaces (faying surfaces) 7 are present. Even in this case, as in the weld 6 shown in Fig. 1, the intersection of an outer edge of the nugget 3 and one of the faying surfaces 7 is denoted as a nugget edge E. A position 50 $\mu$m from the nugget edge E along the faying surface 7 toward the center of the nugget 3 is denoted as a point A, and a position 200 $\mu$m from the nugget edge E along the faying surface 7 toward the heat-affected zone 4 is denoted as a point B. The microstructure described above is formed in a region from the point A to the point B in the weld 6.

[High strength steel sheet]

A description will be given of the reasons for the limitations on the chemical composition of the high strength steel sheet in the automotive member of the invention. In the following description, "%" in the chemical composition represents "% by mass" unless otherwise specified.

C: 0.21 to 0.40%

C is an element effective in increasing the strength of the steel sheet. Moreover, C contributes to the formation of martensite and tempered martensite, which are included in the microstructure of the weld in the invention, and also contributes to the formation of Ti-based and Nb-based carbides, which are important in the invention. If the content of C is less than 0.21%, the amount of the Ti-based and Nb-based precipitates formed through resistance spot welding is small, and therefore delayed fracture resistance deteriorates. Therefore, the content of C is 0.21% or more. The content of C is preferably 0.23% or more. If an excessively large amount of C is added, the desired volume fractions are not obtained in the microstructure in the vicinity of the nugget after resistance spot welding. Therefore, the content of C is 0.40% or less. The content of C is preferably 0.38% or less and more preferably 0.36% or less.

Si: 1.0 to 1.9%

Si reduces the segregation of Mn and therefore has the effect of mitigating the hardness distribution in the steel sheet in the thickness direction. Therefore, the bendability is improved, so that the press formability is improved. To obtain this effect, the content of Si needs to be 1.0% or more. The content of Si is preferably 1.1% or more. However, if an excessively large amount of Si is added, chemical convertibility and coatability deteriorate. Therefore, the content of Si is set to 1.9% or less. The content of Si is preferably 1.8% or less and more preferably 1.6% or less.

Mn: 2.0 to 3.6%

Mn is an element that contributes to an increase in the cross tensile strength through solid solution strengthening and the formation of martensite and tempered martensite. Moreover, Mn is an element that stabilizes austenite and is an element necessary for controlling the fractions of the steel sheet structures in the high strength steel sheet. To obtain these effects, the content of Mn needs to be 2.0% or more. If an excessively large amount of Mn is contained, the desired volume fractions are not obtained in the microstructure in the vicinity of the nugget after resistance spot welding. Moreover, when hydrogen enters the steel sheet, slip constraint at grain boundaries increases, and cracks easily propagate along the grain boundaries, so that the delayed fracture resistance after resistance spot welding deteriorates. Therefore, the content of Mn is 3.6% or less. The content of Mn is preferably 3.3% or less, more preferably 3.1% or less, and still more preferably 2.9% or less.

P: 0.05% or less

If an excessively large amount of P is added, significant segregation of P at grain boundaries occurs. This causes embrittlement of the grain boundaries and a reduction in the strength of the joint. Therefore, the content of P is 0.05% or less. Preferably, the content of P is 0.04% or less. The lower limit of the content of P is not particularly specified. However, reducing the amount of P to a very low level increases the cost of steelmaking. Therefore, the content of P is preferably 0.005% or more.

S: 0.004% or less

When the content of S is large, a large amount of sulfides such as MnS are formed, and cracks may start from MnS when hydrogen enters the steel, causing a reduction in the delayed fracture resistance after resistance spot welding. Therefore, the upper limit of the content of S is 0.004%. The content of S is preferably 0.003% or less. The lower limit of the content of S is not particularly specified. However, reducing the amount of S to a very low level increases the cost of steel making. Therefore, the content of S is preferably 0.0002% or more.

Al: 0.01 to 0.10%

Al is an element necessary for deoxidization. To obtain this effect, the content of Al needs to be 0.01% or more. Al has the effect of reducing the precipitation of cementite during bainite transformation and contributes to the formation of retained austenite in the microstructure of the base metal (i.e., steel sheet microstructure). However, since an excessively large amount of ferrite is formed in the microstructure in the vicinity of the nugget after resistance spot welding, the upper limit of Al is set to 0.10%. The content of Al is preferably 0.08% or less and more preferably 0.07% or less.

N: 0.010% or less

N forms coarse nitrides and causes a reduction in cross tensile strength after resistance spot welding, and therefore the content of N needs to be reduced. This tendency is more pronounced when the content of N exceeds 0.010%. Therefore, the content of N is 0.010% or less. The content of N is preferably 0.0075% or less. The lower limit of the content of N is not particularly specified. However, reducing the content of N to a very low level increases the cost of steel making. Therefore, the content of N is preferably 0.0001% or more.

One or two selected from Nb: 0.005 to 0.080% and Ti: 0.005 to 0.080%

Nb: 0.005 to 0.080%

Nb improves the cross tensile strength and delayed fracture resistance after resistance spot welding through the formation of fine carbonitrides. To obtain this effect, the content on Nb needs to be 0.005% or more. If a large amount of Nb is contained, not only does the elongation decreases significantly, but also slab cracking occurs after continuous casting. Therefore, the content of Nb is 0.080% or less. The content of Nb is preferably 0.070% or less and more preferably 0.055% or less.

Ti: 0.005 to 0.080%

Ti improves the cross tensile strength and delayed fracture resistance after resistance spot welding through the formation of fine carbonitrides. To obtain this effect, the lower limit of the content of Ti is set to 0.005% or more. The content of Ti is preferably 0.008% or more. If a large amount of Ti is added, the elongation decreases significantly. Therefore, the content of Ti is 0.080% or less. The content of Ti is preferably 0.065% or less and more preferably 0.050% or less.

The high strength steel sheet used in the present invention contains the elements described above, with the balance being Fe and incidental impurities. Examples of the incidental impurities include Co, Sn, and Zn. The allowable ranges of the contents of these elements are Co: 0.05% or less, Sn: 0.01% or less, and Zn: 0.01% or less.

In the present invention, the above chemical composition is the basic chemical composition of the high strength coated steel sheet. In the present invention, the high strength coated steel sheet may optionally contain, in addition to the above chemical composition, one or two or more selected from V, Cr, Mo, Cu, Ni, Sb, B, Ca, and REMs. Each of the components V, Cr, Mo, Cu, Ni, Sb, B, Ca, and REMs may be optionally contained, and the contents of these components may be 0%.

V: 0.05% or less

V can contribute to an improvement in the delayed fracture resistance through the formation of fine carbonitrides. Since V has the above effect, when V is contained, the content of V is preferably 0.005% or more. Even if a large amount of V is added, the strength increasing effect obtained by the excess amount of V over 0.05% is small. Moreover, this leads to an increase in the cost of alloying. Therefore, when V is contained, the content of V is 0.05% or less.

Cr: 1.0% or less

Cr is an element that contributes to an increase in the cross tensile strength through the formation of martensite and tempered martensite in the resistance spot weld. When Cr is contained to achieve this effect, the content of Cr is preferably 0.05% or more. If the content of Cr exceeds 1.0%, surface defects are easily formed. Therefore, when Cr is contained, the content of Cr is 1.0% or less. The content of Cr is preferably 0.8% or less.

Mo: 0.50% or less

Like Cr, Mo is an element that contributes to an increase in the cross tensile strength through the formation of martensite and tempered martensite in the resistance spot weld. Moreover, Mo is an element that increases the hydrogen overvoltage to thereby improve the delayed fracture resistance. When Mo is contained to achieve these effects, the content of Mo is preferably 0.05% or more. The content of Mo is more preferably 0.10% or more. However, if the content of Mo exceeds 0.50%, the above effects are saturated, and this only leads to an increase in cost. Therefore, when Mo is contained, the content of Mo is 0.50% or less. The content of Mo is preferably 0.42% or less.

Cu: 0.50% or less

When Cu is added, the hydrogen overvoltage increases, and therefore the delayed fracture resistance is improved. When Cu is contained to achieve this effect, the content of Cu is preferably 0.005% or more. Even if the content of Cu exceeds 0.50%, the above effect is saturated, and surface defects caused by Cu are easily formed. Therefore, when Cu is contained, the content of Cu is 0.50% or less.

Ni: 0.50% or less

Like Cu, Ni is an element that increases the hydrogen overvoltage and thereby improves the delayed fracture resistance. When Ni is contained to achieve this effect, the content of Ni is preferably 0.005% or more. When Ni and Cu are added simultaneously, Ni exhibits the effect of suppressing the formation of surface defects caused by Cu and is therefore effective when Cu is added. Even if the content of Ni exceeds 0.50%, the above effects are saturated. Therefore, when Ni is contained, the content of Ni is 0.50% or less.

B: 0.010% or less

B improves the hardenability and contributes to an increase in the cross tensile strength through the formation of martensite and tempered martensite in the resistance spot weld. When B is contained to achieve this effect, the content of B is preferably 0.0002% or more. Even if the content of B exceeds 0.010%, the above effect is saturated. Therefore, when B is contained, the content of B is 0.010% or less. The content of B is preferably 0.008% or less.

Sb: 0.020% or less

Sb has the effect of reducing the formation of a decarburized layer formed in the steel sheet surface layer and therefore allows the potential distribution on the steel sheet surface in an aqueous solution environment to be uniform, so that the delayed fracture resistance is improved. When Sb is contained to achieve the above effect, the content of Sb is preferably 0.001% or more. However, if the content of Sb exceeds 0.020%, a rolling load applied during the production of the steel sheet increases, and the productivity decreases. Therefore, when Sb is contained, the content of Sb is 0.020% or less.

Ca: 0.0050% or less, REMs: 0.0050% or less

Ca and REMs (rare earth metals) are elements that spheroidize sulfides and thereby contribute to an improvement in the delayed fracture resistance and may be added as needed. When Ca and REMs are contained to achieve the above effect, the contents of Ca and REMs are each preferably 0.0005% or more. Even if the contents of Ca and REM exceed 0.0050%, their effects are saturated. Therefore, when Ca and REMs are contained, the contents of Ca and REMs are each 0.0050% or less.

In the present invention, no particular limitation is imposed on the steel sheet microstructure of the above-described high strength steel sheet (i.e., the steel sheet microstructure of the base metal). From the viewpoint of the application of the invention to structural members of automobiles, the base metal is preferably a steel sheet having a steel sheet microstructure containing retained austenite at a volume fraction of 5 to 30%. This is because one issue that arises when the steel sheet used as the base metal (the steel sheet for welding) is a steel sheet having a tensile strength of 1400 MPa or more (high strength steel sheet) is press-formability. It is therefore preferable that the steel sheet microstructure of the base metal contains retained austenite capable of ensuring a large uniform elongation induced by stress transformation at the above-described volume fraction. From the viewpoint of the application to structural members of automobiles, the large uniform elongation is preferably an elongation El of 14% or more as measured according to the specifications of JIS Z 2241.

In the present invention, the high strength steel sheet optionally includes a coated layer on the surface of the steel sheet serving as the base metal. The coated layer is preferably a galvanized layer or a galvannealed layer. In particular, in automotive applications, hot-dip galvanizing treatment may be performed to produce a hot-dip galvanized steel sheet (GI) including a galvanized layer on the surface of the steel sheet serving as the base metal. After the hot-dip galvanizing treatment, galvannealing treatment may be further performed to produce a hot-dip galvannealed steel sheet (GA) including a galvannealed layer on the surface of the steel sheet serving as the base metal.

[Resistance spot welding method]

Next, a resistance spot welding method for the automotive member of the invention having the above-described weld will be described.

The automotive member of the invention is produced by resistance spot welding. Specifically, a sheet set prepared by stacking a plurality of steel sheets including at least one high strength steel sheet is held between a pair of welding electrodes, and the welding electrodes are energized under application of welding force to join the steel sheets together.

For example, two steel sheets are stacked to form a sheet set. Next, the sheet set is held between the pair of welding electrodes disposed on the upper and lower sides of the sheet set, and energization is performed under application of welding force while the energization is controlled such that the prescribed welding conditions are obtained. In this manner, the weld 6 is formed in a sheet gap that forms the faying surface 7 of the steel sheets 1 and 2, and the steel sheets can thereby be joined together (see Fig. 1). A steel sheet including a coated layer (GI or GA) and a steel sheet including no coated layer (i.e., high strength cold rolled steel sheet) may be used to form a sheet set.

An energization step in the present invention will be described. In the present invention, the energization step includes a primary energization step and a post-heat treatment step.

In the primary energization step, the pair of welding electrodes are used to hold the sheet set, and energization is performed at a current value Iw (kA) under the application of welding force. In the example shown in Fig. 1, the primary energization step is performed to melt the steel sheet faying surface 7 (faying surface) of the steel sheet 1 disposed on the lower side and the steel sheet 2 disposed on the upper side to thereby form the nugget 3.

In the present invention, no particular limitation is imposed on the energization conditions and pressurizing conditions for forming the nugget in the primary energization step. From the viewpoint of automotive applications, it is preferable that the energization conditions and the pressurizing conditions are controlled within the following ranges.

For example, the current value Iw (kA) in the primary energization step is preferably 3.0 to 8.5 kA in order to obtain the nugget diameter stably. The nugget diameter used for resistance spot welds for automotive steel sheets is generally $3.0\sqrt{t}$ to $6.0\sqrt{t}$ (t is the smallest one of the thicknesses of the sheets in the sheet set) and may be referred to as the "target nugget diameter" in the following description. If the current value Iw is excessively small, the target nugget diameter cannot be stably obtained. If the current value Iw is excessively large, the diameter of the nugget formed may be larger than the target nugget diameter, or the degree of melting of the steel sheets may increase. In this case, the molten weld splashes out of the sheet gap, so that the diameter of the nugget formed may be smaller than the target nugget diameter. Therefore, the current value Iw is preferably 3.0 to 8.5 kA. The current value Iw is more preferably 4.5 kA or more and is more preferably 8.0 kA or less.

The energization time Tw (ms) in the primary energization step is preferably 120 to 400 ms. The reason for this is the same as the reason for the current value Iw described above. Specifically, the above range is the optimum time for obtaining the target nugget diameter. If the energization time Tw is shorter than 120 ms, the nugget is unlikely to be formed. If the energization time Tw exceeds 400 ms, the nugget diameter may become excessively large, and it is feared that the workability may deteriorate. The energization time Tw is more preferably 150 ms or longer and is more preferably 350 ms or shorter. However, the energization time Tw may be shorter or longer than the above range so long as the nugget diameter required for the invention is obtained.

As for the pressurizing conditions in the primary energization step, the welding force (kN) is preferably 2.0 kN to 7.0 kN. If the welding force is excessively large, the energizing diameter becomes large, and the target nugget diameter is not easily obtained. If the welding force is excessively small, the energizing diameter is small, and splashes are easily generated. In this case, the diameter of the nugget formed may be smaller than the target nugget diameter. Therefore, the welding force is preferably 2.0 to 7.0 kN. The welding force is more preferably 2.5 kN or more. However, the welding force may be smaller or larger than the above range so long as the nugget diameter required in the invention is obtained. The welding force may be limited by the capacity of the apparatus.

In the present invention, the post-heat treatment step of subjecting the weld to post-heat treatment is performed after the primary energization step. The post-heat treatment step includes a cooling process, a heating process, and a transition process and/or a holding process.

In the post-heat treatment step, first, the cooling process is performed. In the cooling process of the post-heat treatment step, the nugget is cooled for a cooling time Tc (ms) of 500 ms or longer. If the cooling time Tc is shorter than 500 ms, martensitic transformation of austenite cannot be facilitated in a region including the vicinity of the edge of the nugget formed in the primary energization step and the heat-affected zone (specifically, the region from the point A to the point B in the weld, see Fig. 1), and the austenite in this state is heated in the subsequent heating process. In this case, the microstructure of the weld cannot contain the above-described structures at the above-described volume fractions. Therefore, the cooling time Tc is 500 ms or longer. The cooling time Tc is preferably 600 ms or longer. The upper limit of the cooling time Tc is not particularly specified. From the viewpoint of productivity, the cooling time Tc is preferably 2000 ms or shorter.

In the post-heat treatment step, the heating process and the transition process and/or the holding process are performed after the cooling process.

Among the heating process and the transition process and/or the holding process, the heating process is first performed. Specifically, energization is performed at a current value higher than the current value Iw in the primary energization step. Then a region extending from the nugget edge to a position 50 $\mu$m from the nugget edge in a direction toward the center of the nugget along the faying surface (i.e., a region from the nugget edge to the point A in the weld) is heated to a temperature range of from the $Ac_1$ point to the $Ac_3$ point, and a region extending from the nugget edge to a position 200 $\mu$m from the nugget edge in the direction toward the heat-affected zone along the faying surface (i.e., the region from the nugget edge to the point B in the heat-affected zone) is heated to a temperature range immediately below the $Ac_2$ point. Then the transition process and/or the holding process is additionally performed under energization conditions that allow the above temperature ranges to be maintained. In this manner, the average number density of the Nb-based precipitate grains and the Ti-based precipitate grains is controlled.

In the heating process, the weld is energized at a current value It (kA) shown in formula (1) for an energization time Tt (ms) shown in formula (2).

$$1.05 \times \text{Iw} \leq \text{It} \leq 1.75 \times \text{Iw} \qquad (1)$$

$$0 < \text{Tt} \leq 200 \qquad (2)$$

In these formulas, Iw is the current value (kA) in the primary energization step;

It is the current value (kA) in the heating process in the post-heat treatment step; and
Tt is the energization time (ms) in the heating process in the post-heat treatment step.

If the current value It in the heating process is less than "1.05 × Iw," the heating is insufficient, so that the above-described volume fractions of ferrite and martensite in the microstructure are not obtained in the region around the nugget edge (specifically, the region from the point A to the point B in the weld). Therefore, the cross tensile strength decreases. The current value It is preferably "1.10 × Iw" or more and more preferably "1.20 × Iw" or more. If the current value It in the heating process exceeds "1.75 × Iw," the region around the nugget edge is overheated, so that the above-described volume fractions of ferrite and tempered martensite in the microstructure are not obtained. Therefore, the delayed fracture resistance deteriorates. The current value It is preferably "1.70 × Iw" or less.

If the energization time Tt in the heating process exceeds 200 ms, an overheated state is formed. Therefore, the above-described volume fractions of ferrite and tempered martensite in the microstructure are not obtained in the region around the nugget edge. This results in a reduction in the delayed fracture resistance. Therefore, the energization time Tt is 200 ms or shorter. To allow the microstructure of the weld to have the above-described structures at the above-described volume fractions, the energization time Tt in the heating process needs to be longer than 0 ms. The energization time Tt is preferably 20 ms or longer.

After the heating process, the weld is subjected to the transition process in which the energization current is continuously reduced from the current value It (kA) to a current value Itm (kA) over a downslope energization time Td (ms) shown in formula (4) and/or the holding process in which energization is performed at a current value Ita (kA) shown in formula (3) for an energization time Tta (ms) shown in formula (4).

$$0.15 \times \text{It} \leq \text{Ita} \leq 0.90 \times \text{It} \qquad (3)$$

$$250 \le Tt + Tta + Td \qquad (4)$$

In these formulas, It is the current value (kA) in the heating process in the post-heat treatment step;

Tt is the energization time (ms) in the heating process in the post-heat treatment step;
Ita is the current value (kA) in the holding process in the post-heat treatment step;
Td is the downslope energization time (ms) in the transition process in the post-heat treatment step; and
Tta is the energization time (ms) in the holding process in the post-heat treatment step. When the transition process is not included in the post-heat treatment step, Td in formula (4) is set to 0 ms. When the holding process is not included in the post-heat treatment step, Tta in formula (4) is set to 0 ms.

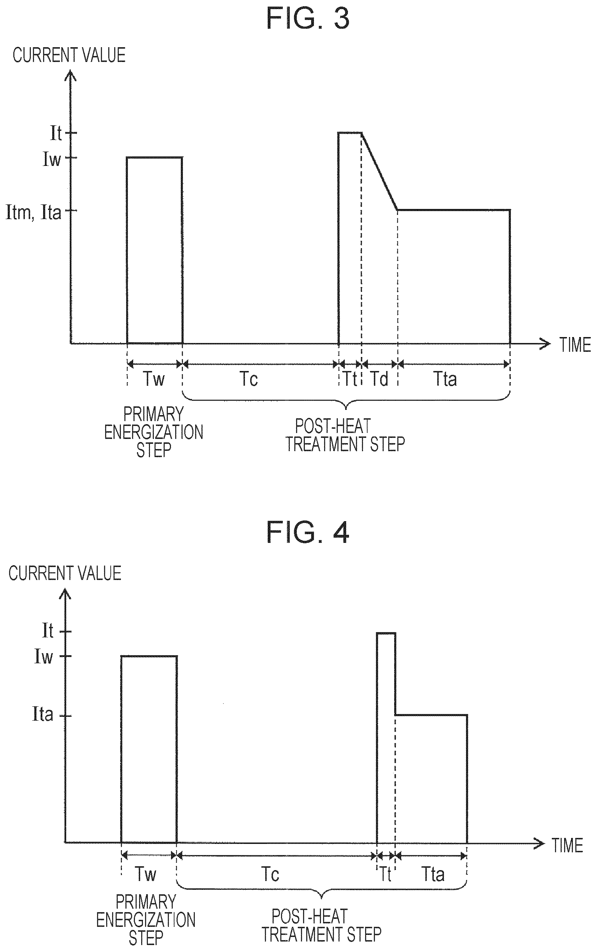

The case where "the heating process and the transition process" are performed in this order (see Fig. 2), the case where "the heating process, the transition process, and the holding process" are performed in this order (see Fig. 3), and the case where "the heating process and the holding process" are performed in this order (see Fig. 4) will be described.

First, the case where only the transition process is performed after the heating process will be described.

As shown in Fig. 2, subsequent to the heating process, the weld is subjected to the transition process in which the energization current is continuously changed (reduced) from the current value It (kA) in the heating process to the current value Itm (kA) at the completion of the energization in the transition process over the downslope energization time Td (ms) shown in formula (4). The reasons for the limitations on the heating process have already been described, and the description thereof will be omitted.

As described above, the object of the transition process is to control the temperature of the region extending from the nugget edge to the position 200 $\mu$m from the nugget edge in the direction toward the heat-affected zone along the faying surface (i.e., the region from the nugget edge to the point B in the heat-affected zone) to the temperature immediately below the $Ac_1$ point.

When the transition time (i.e., downslope energization time Td) in the transition process satisfies formula (4), the above described effects can be obtained even when the transition time is short. Therefore, when the transition process is included, the transition time (downslope energization time Td) is set so as to satisfy formula (4). A long welding time causes a reduction in operational efficiency. Therefore, the transition time is preferably longer than 0 ms and 800 ms or shorter. As shown in Fig. 2, when the holding process is not included, the energization time Tta in formula (4) is set to 0 ms.

If the current value at the start of the energization in the transition process exceeds the current value It (kA) in the heating process, the Nb-based precipitate grains and the Ti-based precipitate grains are coarsened, and the delayed fracture resistance deteriorates. If the current value at the completion of the energization in the transition process is excessively low, tempering is insufficient, and the volume fractions in the microstructure in the region from the nugget edge to the heat-affected zone deviate from the specific ratios, so that the cross tensile strength (CTS) decreases. From the above reason, the current value at the start of the energization in the transition process is set to It (kA).

The current value Itm at the completion of the energization in the transition process is preferably 2.0 kA or more.

Next, the case where both the transition process and the holding process are provided after the heating process (i.e., the transition process is provided between the heating process and the holding process) will be described. As shown in Fig. 3, the heating process described above is performed, and then the transition process is performed. Then the holding process is performed in which the weld is energized at the current value Ita (kA) shown in formula (3) for the energization time Tta (ms) shown in formula (4). In the holding process, the energization is performed with the energization current set to the constant current value Ita (constant current energization). Preferably, the current value Ita (kA) is equal to or lower than the current value Itm at the completion of the energization in the transition process. The reasons for the limitations on the heating process and the transition process have already been described, and the description thereof will be omitted.

If the current value Ita in the holding process is less than "0.15 × It," even though the energization conditions for the heating process (i.e., the conditions shown in formulas (1) and (2)) are satisfied, the temperature of the region from the nugget edge to the heat-affected zone is low. Therefore, the volume fraction of martensite increases, and the volume fraction of tempered martensite decreases. In this case, the weld cannot have the microstructure described above, and the delayed fracture resistance deteriorates. The current value Ita in the holding process is preferably "0.20 × It" or more. If the current value Ita in the holding process exceeds "0.90 × It," an overheated state is formed, so that the weld cannot have the above-described microstructure containing ferrite and tempered martensite at the above-described volume fractions. Moreover, the Nb-based precipitate grains and the Ti-based precipitate grains are coarsened, and therefore the delayed fracture resistance deteriorates.

The energization time Tta in the holding process is controlled such that the total energization time in the post-heat treatment step satisfies the relational expression of formula (4).

If the sum of the energization time Tt (ms) in the heating process, the downslope energization time Td (ms) in the transition process, and the energization time Tta (ms) in the holding process is shorter than 250 ms, the region around the nugget edge cannot be sufficiently held in the heating temperature range in the heating process, so that the weld cannot have the above-described microstructure containing ferrite, martensite, and tempered martensite at the above-described volume fractions. The upper limit of the total energization time in the post-heat treatment step is not particularly specified. However, from the viewpoint of workability, the total energization time is preferably 3000 ms or shorter and more preferably 2500 ms or shorter.

Finally, the case where only the holding process is provided after the heating process will be described.

As shown in Fig. 4, the above-described heating process is performed, and then the weld is subjected to the above-described holding process. The reasons for the limitations on the heating process and the holding process have already been described, and the description thereof will be omitted.

When the transition process is not included, the downslope energization time Td in formula (4) is set to 0 ms.

As described above, in the present invention, the sheet set including at least one steel sheet having extremely high tensile strength is resistance-spot-welded, and the automotive member including the resistance spot weld having good joint performance can be stably obtained.

For example, even when a steel sheet having a tensile strength of 1400 MPa or more and an elongation of 14% or more is used as the steel sheet having both extremely high tensile strength and elongation (high strength steel sheet), an automotive member can be provided which has a resistance spot welded joint having a nugget diameter of 4.5√t and a cross tensile strength of 7.0 kN or more and in which, even when the resistance spot weld with a constant load test load applied thereto is subjected to cathodic electrolytic charging, no cracking occurs.

EXAMPLES

Examples of the invention will next be described. However, the invention is not limited by the following Examples but by the appended claims, which define the invention.

Steel having a chemical composition shown in Table 1 was obtained by melting steel and subjected to continuous casting to produce a slab. "-" in Table 1 means that additional elements are not intentionally added and is intended to encompass the case where no additional elements are added (0%) and also the case where additional elements are unavoidably contained.

The slab was heated and then subjected to hot rolling at a finishing delivery temperature of 900°C to obtain a hot-rolled steel sheet (thickness: 3.2 mm), and the hot-rolled steel sheet was cooled to a finish cooling temperature of 500°C and wound into a coil at a coiling temperature of 500°C. The obtained hot rolled steel sheet was pickled and then cold-rolled to obtain a cold rolled steel sheet (thickness: 1.4 mm).

Then the obtained cold rolled steel sheet was subjected to heat treatment at 850°C for 10 minutes and then cooled to room temperature to thereby anneal the steel sheet, and a high strength steel sheet was thereby produced. Part of the produced high strength steel sheet was formed into a steel sheet having a coated layer (GI or GA), and the rest of the steel sheet was used as a steel sheet having no coated layer (i.e., a high strength cold rolled steel sheet: CR).

Test specimens with a size of 50 mm × 150 mm were cut from the produced high strength steel sheets (CR, GI, and GA), and the test specimens were combined as shown in Tables 2 and 4 and stacked to produce sheet sets. Then the sheet sets were subjected to resistance spot welding under welding conditions shown in Tables 2 and 4 to thereby obtain resistance spot welded members.

The welding apparatus used was a servo motor pressing-type single-phase AC (50 Hz) resistance welder attached to a welding gun. The pair of electrode tips used were chromium-copper DR-type electrodes having a tip curvature radius R of 40 mm and a tip diameter of 6 mm.

JIS No. 5 test pieces for a tensile test were cut from each of the obtained high strength steel sheets in the rolling direction, and a tensile test was performed according to JIS Z 2241 to measure the tensile strength.

The steel sheet microstructure of each of the base metals was evaluated using the following method.

The volume fraction of retained austenite was determined by grinding the obtained high strength steel sheet to a surface at a position 1/4 of the thickness in the thickness direction (the surface at a position 1/4 of the thickness of the sheet) and using the X-ray diffraction intensity on the surface at the position 1/4 of the thickness of the sheet. The Kα line of Mo was used as a line source, and the integral intensities of X-ray diffraction lines from the {200}, {211}, and {220} planes of iron ferrite and the {200}, {220}, and {311} planes of austenite were measured by an X-ray diffraction method (apparatus: RINT 2200 manufactured by Rigaku) at an acceleration voltage of 50 keV. These measured values were used to determine the volume fraction of the retained austenite using a computational formula described in "X-ray Diffraction Handbook" (2000), Rigaku Corporation, p. 26, 62-64. The volume fraction (%) of the structure is shown in Table 2 or 4.

Each of the obtained resistance spot welded members was used to evaluate the microstructure in the weld, the cross tensile strength of the weld joint, and its delayed fracture resistance.

<Method for evaluating microstructure of weld>

As shown in Fig. 1, a position 50 μm from the nugget edge of the weld in the direction toward the center of the nugget 3 along the faying surface 7 is denoted as a point A. A position 200 $\mu$m from the nugget edge toward the heat-affected zone along the faying surface 7 is denoted as a point B. The volume fractions of ferrite, martensite, and tempered martensite in the microstructure in the nugget edge and the heat-affected zone within the region from the point A to the point B were measured as follows. The above region was cut from the obtained resistance spot welded member, and its thicknesswise cross section (the cross section in the thickness direction) was polished, etched with 3% nital, and observed using an SEM (scanning electron microscope) at a magnification of 3000X. A point count method (according to ASTM E562-83 (1988)) was used to measure the area fractions of the above-described structures, and the area fractions were used as the volume fractions. As for the remaining structures, the microstructure of the steel sheet including the weld was observed under an SEM, a TEM (transmission electron microscope), and an FE-SEM (field emission scanning electron microscope) to determine the types of steel structures other than ferrite, martensite, and tempered martensite. The total volume fraction of the remaining structures is shown in Table 3 or 5.

The fine Nb-based carbides and the fine Ti-based carbides in the region from the point A to the point B were measured as follows.

The grain diameters of the Nb-based precipitate grains and the Ti-based precipitate grains were determined as follows. The above region was cut from the obtained resistance spot welded member, and the thicknesswise cross section was ground, etched with 3% nital, and observed using a TEM (transmission electron microscope) at a magnification of 10000X. Then Image-Pro was used to compute equivalent circle diameters of the precipitate grains with the lower limit set to 0.005 $\mu$m to thereby determine the grain diameters of the precipitate grains. The average number density (grains/100 $\mu m^2$) of Nb-based precipitate grains having a grain diameter less than 0.09 $\mu$m was determined by observing the precipitate grains using a TEM (transmission electron microscope) at a magnification of 10000X to determine the number densities at 10 points and computing the average of the number densities. The average number density of Ti-based precipitate grains having a grain diameter less than 0.09 $\mu$m was determined in the same manner as above.

<Evaluation of cross tensile strength of resistance spot welded joint>

The cross tensile strength (CTS) after resistance spot welding was determined based on a cross tensile test method (JIS Z 3137). Cross tensile test pieces (lateral length: 50 mm, longitudinal length: 150 mm) were cut from the obtained high strength steel sheets. Test specimens were prepared using sheet sets shown in Tables 2 and 4 and resistance-spot-welded under welding conditions shown in Tables 2 and 4. In Tables 3 and 5, when the cross tensile strength (CTS) was 7.0 kN or more, the cross tensile strength after resistance spot welding was rated good (represented by the symbol "o" in Tables 3 and 5). When the cross tensile strength was less than 7.0 kN, the cross tensile strength after resistance spot welding was rated poor (represented by the symbol "×" in Tables 3 and 5). Specifically, when the cross tensile strength was good, the weld was rated as having "good cross tensile strength."

<Evaluation of delayed fracture resistance of resistance spot welded joint>

The delayed fracture resistance was evaluated by the following method.

First, for a sheet set including two stacked steel sheets, square spacers with a side length of 50 mm and a thickness of 1.4 mm were disposed at opposite end portions of the sheet set so as to be sandwiched between the two steel sheets (longitudinal length: 150 mm, lateral length: 50 mm), and tack welding was performed. Then the sheet set including the two stacked steel sheets was welded at its center under welding conditions shown in Table 2 to produce a welded joint.

For a sheet set including three stacked steel sheets, the spacers were disposed at opposite end portions of the sheet set so as to be sandwiched between adjacent stacked steel sheets, and tack welding was performed. Then the sheet set including the three stacked steel sheets was welded at its center under welding conditions shown in Table 4 to produce a welded joint. The phrase "sandwiched between adjacent stacked steel sheets" means specifically that the spacers were disposed between the upper and intermediate steel sheets and between the intermediate and lower steel sheets.

Each of the obtained welded joints was left to stand in air at room temperature (25°C) for 24 hours and then immersed in a hydrochloric acid solution (pH = 2.5) for 96 hours, and the presence or absence of delayed fracture was checked. In Tables 3 and 5, when no delayed fracture occurred in the welded joint after immersion, the symbol "o" was assigned. When fracture occurred, the symbol "×" was assigned. Specifically, when the symbol "○" was assigned, the weld joint was rated as having "good delayed fracture resistance."

The results of the measurement of the tensile strength and steel sheet microstructure of each base metal, the microstructure of each weld, and the cross tensile strength and delayed fracture resistance of each welded joint are shown in Table 2 to Table 5.

[Table 1]

| Steel type | Chemical composition (% by mass) | | | | | | | | | | Remarks |
|---|---|---|---|---|---|---|---|---|---|---|---|
| | C | Si | Mn | P | S | Al | N | Nb | Ti | Other components | |
| A | 0.31 | 1.25 | 2.99 | 0.01 | 0.001 | 0.03 | 0.002 | 0.021 | 0.022 | - | Suitable steel |
| B | 0.28 | 1.44 | 3.12 | 0.01 | 0.001 | 0.02 | 0.003 | - | 0.019 | Sb:0.008, B:0.0022 | Suitable steel |
| C | 0.24 | 1.65 | 2.15 | 0.01 | 0.002 | 0.03 | 0.002 | 0.055 | 0.011 | V:0.02, Cu:0.11, Ni:0.18 | Suitable steel |
| D | 0.37 | 1.20 | 2.88 | 0.01 | 0.001 | 0.03 | 0.003 | 0.025 | 0.025 | Cr:0.22,Ca:0.002, REM:0.002 | Suitable steel |
| E | 0.33 | 1.55 | 3.45 | 0.01 | 0.002 | 0.08 | 0.005 | 0.034 | - | Mo:0.15 | Suitable steel |
| F | 0.45 | 1.33 | 2.55 | 0.01 | 0.003 | 0.03 | 0.003 | 0.025 | 0.055 | - | Comparative steel |
| G | 0.19 | 1.65 | 3.22 | 0.01 | 0.002 | 0.03 | 0.004 | 0.024 | 0.029 | - | Comparative steel |
| H | 0.27 | 1.56 | 3.23 | 0.01 | 0.001 | 0.03 | 0.003 | - | - | - | Comparative steel |
| I | 0.23 | 1.28 | 2.86 | 0.05 | 0.004 | 0.05 | 0.002 | 0.016 | 0.031 | - | Suitable steel |

* The balance is Fe and incidental impurities.

[Table 2]

| No. | Sheet set | | | | | | | | Welding conditions | | | | | | | | | | | Remarks |
| | Upper steel sheet | | | | Lower steel sheet | | | | Primary energization step | | | Cooling process | Post-heat treatment step | | | | | | | |
| | | | | | | | | | | | | | Heating process | | Transition process | | Holding process | | | |
| | | | | | | | | | | | | | | | | | Constant energization | | | |
| | Steel type | Tensile strength TS (MPa) | Retained austenite (% by volume) | Type of coating | Steel type | Tensile strength TS (MPa) | Retained austenite (% by volume) | Type of coating | Current value Iw (kA) | Energization time Tw (ms) | Welding force (kN) | Cooling time Tc (ms) | Current value It (kA) | Energization time Tt (ms) | Current value at completion of energization Itm (kA) | Downslope energization time Td (ms) | Current value Ita (kA) | Energization time Tta (ms) | Tt + Td + Tta (ms) | Remarks |
|---|---|---|---|---|---|---|---|---|---|---|---|---|---|---|---|---|---|---|---|---|
| 1 | A | 1523 | 7 | CR | A | 1523 | 7 | CR | 6.5 | 300 | 4.5 | 1200 | 7.5 | 60 | - | - | 4.5 | 600 | 660 | Inventive Example |
| 2 | B | 1568 | 11 | GA | C | 1505 | 13 | GI | 6.8 | 260 | 4.5 | 1500 | 7.8 | 40 | 2.3 | 400 | - | - | 440 | Inventive Example |
| 3 | C | 1505 | 13 | GI | B | 1568 | 11 | GA | 7.0 | 250 | 5.0 | 700 | 8.1 | 40 | 5.3 | 50 | 5.3 | 1000 | 1090 | Inventive Example |
| 4 | D | 1588 | 7 | CR | A | 1523 | 7 | CR | 6.8 | 300 | 3.5 | 1100 | 7.2 | 100 | - | - | 5.0 | 400 | 500 | Inventive Example |
| 5 | E | 1555 | 12 | CR | D | 1588 | 7 | CR | 6.8 | 300 | 5.5 | 1100 | 7.2 | 100 | - | - | 5.0 | 400 | 500 | Inventive Example |
| 6 | A | 1523 | 7 | CR | A | 1523 | 7 | CR | 6.5 | 300 | 4.5 | - | - | - | - | - | - | - | - | Comparative Example |
| 7 | C | 1505 | 13 | GI | A | 1523 | 7 | CR | 6.4 | 300 | 4.5 | 300 | 7.5 | 60 | - | - | 4.5 | 600 | 660 | Comparative Example |
| 8 | C | 1505 | 13 | GI | A | 1523 | 7 | CR | 6.5 | 300 | 4.5 | 1200 | 5.3 | 60 | 2.3 | 400 | - | - | 460 | Comparative Example |
| 9 | C | 1505 | 13 | GI | A | 1523 | 7 | CR | 6.5 | 300 | 4.5 | 1000 | 7.2 | 350 | - | - | 4.5 | 600 | 950 | Comparative Example |
| 10 | C | 1505 | 13 | GI | A | 1523 | 7 | CR | 6.5 | 300 | 4.5 | 800 | 7.2 | 100 | - | - | 1.0 | 600 | 700 | Comparative Example |
| 11 | C | 1505 | 13 | GI | A | 1523 | 7 | CR | 6.5 | 300 | 4.5 | 1000 | 7.2 | 60 | - | - | 7.5 | 600 | 660 | Comparative Example |
| 12 | C | 1505 | 13 | GI | A | 1523 | 7 | CR | 6.5 | 300 | 4.5 | 1000 | 7.5 | 20 | - | - | 4.5 | 50 | 70 | Comparative Example |
| 13 | F | 1685 | 7 | CR | F | 1685 | 7 | CR | 6.5 | 300 | 4.5 | 1200 | 7.5 | 60 | - | - | 4.5 | 600 | 660 | Comparative Example |
| 14 | G | 1302 | 8 | CR | G | 1302 | 8 | CR | 6.5 | 300 | 4.5 | 1200 | 7.5 | 60 | - | - | 4.5 | 600 | 660 | Comparative Example |
| 15 | H | 1505 | 8 | CR | H | 1505 | 8 | CR | 6.5 | 300 | 4.5 | 1200 | 7.5 | 60 | - | - | 4.5 | 600 | 660 | Comparative Example |
| 16 | A | 1523 | 7 | CR | A | 1523 | 7 | CR | 6.5 | 300 | 4.5 | 1200 | 12.0 | 60 | 7.2 | 600 | 4.5 | 600 | 660 | Comparative Example |
| 17 | I | 1422 | 8 | CR | I | 1422 | 8 | CR | 6.5 | 250 | 3 | 1000 | 7.0 | 120 | - | - | 4.8 | 350 | 470 | Inventive Example |
| 18 | A | 1523 | 7 | CR | A | 1523 | 7 | CR | 8.0 | 350 | 6.5 | 600 | 8.9 | 15 | - | - | 4.3 | 1000 | 1015 | Inventive Example |
| 19 | A | 1523 | 7 | CR | A | 1523 | 7 | CR | 8.0 | 350 | 6 | 800 | 9.2 | 150 | - | - | 4.6 | 1600 | 1750 | Inventive Example |
| 20 | A | 1523 | 7 | CR | A | 1523 | 7 | CR | 8.0 | 350 | 6 | 800 | 9.2 | 150 | 5.0 | 200 | 4.0 | 400 | 750 | Inventive Example |

[Table 3]

| No. | Microstructure of resistance spot weld | | | | | Evaluation | | Remarks |
|---|---|---|---|---|---|---|---|---|
| | Ferrite fraction (% by volume) | Martensite fraction (% by volume) | Tempered martensite fraction (% by volume) | Remaining structures (% by volume) | Average number density of Nb-based and Ti-based precipitate grains having diameter less than 0.09 $\mu$m (grains / 100 $\mu$m$^2$) | CTS | Delayed fracture resistance | |
| 1 | 7 | 34 | 59 | 0 | 28 | ○ | ○ | Inventive Example |
| 2 | 10 | 30 | 60 | 0 | 21 | ○ | ○ | Inventive Example |
| 3 | 18 | 37 | 43 | 2 | 33 | ○ | ○ | Inventive Example |
| 4 | 15 | 29 | 56 | 0 | 39 | ○ | ○ | Inventive Example |
| 5 | 12 | 27 | 60 | 1 | 41 | ○ | ○ | Inventive Example |
| 6 | 0 | 100 | 0 | 0 | 5 | × | × | Comparative Example |
| 7 | 0 | 85 | 15 | 0 | 12 | × | × | Comparative Example |
| 8 | 0 | 25 | 75 | 0 | 15 | × | ○ | Comparative Example |
| 9 | 0 | 100 | 0 | 0 | 2 | × | × | Comparative Example |
| 10 | 12 | 83 | 5 | 0 | 15 | × | × | Comparative Example |
| 11 | 3 | 97 | 0 | 0 | 5 | × | × | Comparative Example |
| 12 | 0 | 80 | 20 | 0 | 11 | × | × | Comparative Example |
| 13 | 4 | 61 | 35 | 0 | 12 | × | × | Comparative Example |
| 14 | 16 | 38 | 46 | 0 | 7 | ○ | × | Comparative Example |
| 15 | 11 | 31 | 58 | 0 | 0 | × | × | Comparative Example |
| 16 | 0 | 100 | 0 | 0 | 4 | × | × | Comparative Example |
| 17 | 22 | 35 | 40 | 3 | 35 | ○ | ○ | Inventive Example |

(continued)

| No. | Ferrite fraction (% by volume) | Martensite fraction (% by volume) | Tempered martensite fraction (% by volume) | Remaining structures (% by volume) | Average number density of Nb-based and Ti-based precipitate grains having diameter less than 0.09 μm (grains / 100 μm²) | CTS | Delayed fracture resistance | Remarks |
|---|---|---|---|---|---|---|---|---|
| | | | | | | Evaluation | | |
| 18 | 3 | 50 | 47 | 0 | 35 | ○ | ○ | Inventive Example |
| 19 | 10 | 6 | 83 | 1 | 100 | ○ | ○ | Inventive Example |
| 20 | 16 | 31 | 53 | 0 | 61 | ○ | ○ | Inventive Example |

[Table 4]

| No. | Upper steel sheet Steel type | Upper Tensile strength TS (MPa) | Upper Retained austenite (% by volume) | Upper Type of coating | Intermediate Steel type | Intermediate Tensile strength TS (MPa) | Intermediate Retained austenite (% by volume) | Intermediate Type of coating | Lower Steel type | Lower Tensile strength TS (MPa) | Lower Retained austenite (% by volume) | Lower Type of coating | Primary: Current value Iw (kA) | Primary: Energization time Tw (ms) | Welding force (kN) | Cooling time Tc (ms) | Heating: Current value It (kA) | Heating: Energization time Tt (ms) | Transition: Current value at completion of energization Itm (kA) | Transition: Downslope energization time Td (ms) | Holding: Current value Ita (kA) | Holding: Energization time Tta (ms) | Tt + Td + Tta (ms) | Remarks |
|---|---|---|---|---|---|---|---|---|---|---|---|---|---|---|---|---|---|---|---|---|---|---|---|---|
| 21 | B | 1568 | 11 | GA | B | 1568 | 11 | GA | B | 1568 | 11 | GA | 7.0 | 250 | 6.5 | 900 | 0.1 | 45 | - | - | 6.1 | 1000 | 1045 | Inventive Example |
| 22 | B | 1568 | 11 | GA | B | 1568 | 11 | GA | B | 1568 | 11 | GA | 6.5 | 300 | 6.2 | 1200 | 7.5 | 60 | - | - | 4.5 | 600 | 660 | Inventive Example |

[Table 5]

| No. | Ferrite fraction (% by volume) | Martensite fraction (% by volume) | Tempered martensite fraction (% by volume) | Remaining structures (% by volume) | Average number density of Nb-based and Ti-based precipitate grains having diameter less than 0.09 μm (grains / 100 μm²) | CTS | Delayed fracture resistance | Remarks |
|---|---|---|---|---|---|---|---|---|
| | | | Microstructure of resistance spot weld | | | Evaluation | | |
| 21 | 16 | 35 | 46 | 3 | 31 | ○ | ○ | Inventive Example |
| 22 | 18 | 30 | 52 | 0 | 45 | ○ | ○ | Inventive Example |

Reference Signs List

| | |
|---|---|
| 1, 2 | steel sheet |
| 3 | nugget |
| 4 | heat-affected zone |
| 6 | resistance spot weld |
| 7 | steel sheet faying surface |

**Claims**

1. An automotive member comprising a resistance spot weld formed by resistance-spot-welding a plurality of steel sheets including at least one high strength steel sheet,

wherein the high strength steel sheet has a chemical composition containing, in mass%,
C: 0.21 to 0.40%,
Si: 1.0 to 1.9%,
Mn: 2.0 to 3.6%,
P: 0.05% or less,
S: 0.004% or less,
Al: 0.01 to 0.10%, and
N: 0.010% or less and
further containing one or two selected from Nb: 0.005 to 0.080% and Ti: 0.005 to 0.080%,
and optionally further containing, in mass%, one or two or more selected from
V: 0.05% or less,
Cr: 1.0% or less,
Mo: 0.50% or less,
Cu: 0.50% or less,
Ni: 0.50% or less,
Sb: 0.020% or less,
B: 0.010% or less,
Ca: 0.0050% or less, and
REMs: 0.0050% or less,
with the balance being Fe and incidental impurities,
wherein the incidental impurities optionally include Co: 0.05% or less, Sn: 0.01% or less, and Zn: 0.01% or less,
wherein the high strength steel sheet has a tensile strength of 1400 MPa or more,
wherein, when a position 50 $\mu$m from an edge of a nugget of the resistance spot weld in a direction toward a central portion of the nugget along a steel sheet faying surface is denoted as a point A and a position 200 $\mu$m from the edge of the nugget in a direction toward a heat-affected zone along the steel sheet faying surface is denoted as a point B, the microstructure of a region extending from the point A to the point B within the nugget and the heat-affected zone is a composite microstructure containing ferrite at a volume fraction of 1 to 30%, martensite at a volume fraction of 1 to 50%, and tempered martensite at a volume fraction of 20% or more,
wherein the region extending from the point A to the point B within the nugget and the heat-affected zone is a region surrounded by a straight line perpendicular to the steel sheet faying surface at the point A and an arc passing through the point B with the center at the point A,
wherein, when one or two or more of bainite, retained austenite, and pearlite are formed as remaining structures in the microstructure of the region extending from the point A to the point B within the nugget and the heat-affected zone, the volume fraction of bainite is 10% or less, including 0%, the volume fraction of retained austenite is 10% or less, including 0%, and the volume fraction of pearlite is 3% or less, including 0%, wherein the total volume fraction of remaining structures is 23% or less, including 0%,
wherein, in the region extending from the point A to the point B, the average number density of Nb-based precipitate grains having a grain diameter less than 0.09 $\mu$m and Ti-based precipitate grains having a grain diameter less than 0.09 $\mu$m is 10 grains or more per 100 $\mu$m$^2$ in a sheet cross section, and
wherein the microstructure of the region extending from the point A to the point B within the nugget and the heat-affected zone and the average number density of Nb-based precipitate grains having a grain diameter less than 0.09 $\mu$m and Ti-based precipitate grains having a grain diameter less than 0.09 $\mu$m are measured by the methods set out in the description.

2. The automotive member according to claim 1, wherein the high strength steel sheet has a microstructure containing retained austenite at a volume fraction of 5 to 30%.

3. The automotive member according to claim 1 or 2, wherein the high strength steel sheet has a coated layer on a surface thereof.

4. The automotive member according to claim 3, wherein the coated layer is a galvanized layer or a galvannealed layer.

5. A resistance spot welding method for the automotive member according to any one of claims 1 to 4, the method comprising,
when a sheet set including the plurality of steel sheets including the at least one high strength steel sheet that are stacked together is held between a pair of welding electrodes and joined by energizing the sheet set under application of welding force:

a primary energization step of energizing the sheet set at a current value Iw (kA) to thereby form the nugget; and a post-heat treatment step of subjecting the nugget and the heat-affected zone to post-heat treatment, wherein the post-heat treatment step includes:

a cooling process of cooling the edge of the nugget for a cooling time of 500 ms or longer;
a heating process of energizing the edge of the nugget and the heat-affected zone at a current value It (kA) shown in formula (1) for an energization time Tt (ms) shown in formula (2); and
a transition process in which, after the heating process, an energization current applied to the edge of the nugget and the heat-affected zone is continuously reduced from the current value It (kA) to a current value Itm (kA) over a downslope energization time Td (ms) shown in formula (4) and/or a holding process of performing energization at a current value Ita (kA) shown in formula (3) for an energization time Tta (ms) shown in formula (4):

$$1.05 \times Iw \leq It \leq 1.75 \times Iw \quad (1)$$

$$0 < Tt \leq 200 \quad (2)$$

$$0.15 \times It \leq Ita \leq 0.90 \times It \quad (3)$$

$$250 \leq Tt + Tta + Td \quad (4)$$

where, in the formulas, Iw is the current value (kA) in the primary energization step;
It is the current value (kA) in the heating process in the post-heat treatment step;
Tt is the energization time (ms) in the heating process in the post-heat treatment step;
Ita is the current value (kA) in the holding process in the post-heat treatment step;
Td is the downslope energization time (ms) in the transition process in the post-heat treatment step; and
Tta is the energization time (ms) in the holding process in the post-heat treatment step,
provided that, when the transition process is not included in the post-heat treatment step, Td in formula (4) is set to 0 ms and that, when the holding process is not included in the post-heat treatment step, Tta in formula (4) is set to 0 ms.

**Patentansprüche**

1. Automobilelement, umfassend eine Widerstandspunktschweißung, die durch Widerstandspunktschweißen einer Vielzahl von Stahlblechen, die mindestens ein hochfestes Stahlblech beinhaltet, gebildet wird,

wobei das hochfeste Stahlblech eine chemische Zusammensetzung aufweist, die Folgendes in Masse-% enthält,
C: 0,21 bis 0,40 %,
Si: 1,0 bis 1,9 %,
Mn: 2,0 bis 3,6 %,

P: 0,05 % oder weniger,

S: 0,004 % oder weniger,

Al: 0,01 bis 0,10 % und

N: 0,010 % oder weniger und

ferner eines oder zwei ausgewählt aus Nb: 0,005 bis 0,080 % und Ti: 0,005 bis 0,080 % enthält, und optional ferner in Masse-% eines oder zwei oder mehr der Folgenden enthält, ausgewählt aus:

V: 0,05 % oder weniger,

Cr: 1,0 % oder weniger,

Mo: 0,50 % oder weniger,

Cu: 0,50 % oder weniger,

Ni: 0,50 % oder weniger,

Sb: 0,020 % oder weniger,

B: 0,010 % oder weniger,

Ca: 0,0050 % oder weniger und

REMs: 0,0050 % oder weniger,

wobei es sich bei dem Rest um Fe und zufällige Verunreinigungen handelt,

wobei die zufälligen Verunreinigungen optional Co: 0,05 % oder weniger, Sn: 0,01 % oder weniger und Zn: 0,01 % oder weniger beinhalten,

wobei das hochfeste Stahlblech eine Zugfestigkeit von 1400 MPa oder mehr aufweist,

wobei, wenn eine Position 50 $\mu$m vom Rand einer Schweißlinse der Widerstandspunktschweißung in Richtung eines zentralen Abschnitts der Schweißlinse entlang einer Stahlblechfügefläche als Punkt A bezeichnet wird und eine Position 200 $\mu$m vom Rand der Schweißlinse in Richtung einer Wärmeeinflusszone entlang der Stahlblechfügefläche als Punkt B bezeichnet wird, die Mikrostruktur eines Bereichs, der sich vom Punkt A zum Punkt B innerhalb der Schweißlinse und der Wärmeeinflusszone erstreckt, eine zusammengesetzte Mikrostruktur ist, die Ferrit mit einem Volumenanteil von 1 bis 30 %, Martensit mit einem Volumenanteil von 1 bis 50 % und getemperten Martensit mit einem Volumenanteil von 20 % oder mehr enthält,

wobei der Bereich, der sich vom Punkt A zum Punkt B innerhalb der Schweißlinse und der Wärmeeinflusszone erstreckt, ein Bereich ist, der von einer geraden Linie senkrecht zur Stahlblechfügefläche am Punkt A und einem durch den Punkt B verlaufenden Bogen mit dem Mittelpunkt am Punkt A umgeben ist, wobei, wenn ein oder zwei oder mehr von Bainit, Restaustenit und Perlit als Reststrukturen in der Mikrostruktur des Bereichs, der sich vom Punkt A zum Punkt B innerhalb der Schweißlinse und der Wärmeeinflusszone erstreckt, gebildet werden, der Volumenanteil des Bainits 10 % oder weniger, einschließlich 0 %, beträgt, der Volumenanteil des Restaustenits 10 % oder weniger, einschließlich 0 %, beträgt, und der Volumenanteil des Perlits 3 % oder weniger, einschließlich 0 %, beträgt, wobei der Gesamtvolumenanteil der Reststrukturen 23 % oder weniger, einschließlich 0 %, beträgt,

wobei im Bereich, der sich vom Punkt A zum Punkt B erstreckt, die durchschnittliche Anzahldichte von Ausscheidungskörnern auf Nb-Basis mit einem Korndurchmesser von weniger als 0,09 $\mu$m und Ausscheidungskörnern auf Ti-Basis mit einem Korndurchmesser von weniger als 0,09 $\mu$m 10 Körner oder mehr pro 100 $\mu$m$^2$ in einem Blechquerschnitt beträgt, und

wobei die Mikrostruktur des Bereichs, der sich vom Punkt A zum Punkt B innerhalb der Schweißlinse und der Wärmeeinflusszone erstreckt, und die durchschnittliche Anzahldichte von Ausscheidungskörnern auf Nb-Basis mit einem Korndurchmesser von weniger als 0,09 $\mu$m und Ausscheidungskörnern auf Ti-Basis mit einem Korndurchmesser von weniger als 0,09 $\mu$m durch die in der Beschreibung dargelegten Verfahren gemessen werden.

2. Automobilelement nach Anspruch 1, wobei das hochfeste Stahlblech eine Mikrostruktur aufweist, die Restaustenit mit einem Volumenanteil von 5 bis 30 % enthält.

3. Automobilelement nach Anspruch 1 oder 2, wobei das hochfeste Stahlblech auf einer seiner Oberflächen eine beschichtete Schicht aufweist.

4. Automobilelement nach Anspruch 3, wobei die beschichtete Schicht eine galvanisierte Schicht oder eine Galvannealed-Schicht ist.

5. Widerstandspunktschweißverfahren für das Automobilelement nach einem der Ansprüche 1 bis 4, wobei das Verfahren Folgendes umfasst:

wenn ein Blechsatz, der die Vielzahl von Stahlblechen beinhaltet, die das mindestens eine hochfeste Stahlblech beinhaltet, die übereinander gestapelt sind, zwischen einem Paar Schweißelektroden gehalten und durch Energiebeaufschlagen des Blechsatzes unter Anwendung von Schweißkraft verbunden wird:

einen primären Energiebeaufschlagungsschritt, bei dem der Blechsatz mit einem Stromwert Iw (kA) mit Energie beaufschlagt wird, um dadurch die Schweißlinse zu bilden; und einen Nachwärmebehandlungsschritt, bei dem die Schweißlinse und die Wärmeeinflusszone einer Nachwärmebehandlung unterzogen werden, wobei der Nachwärmebehandlungsschritt Folgendes beinhaltet:

einen Abkühlungsprozess, bei dem der Rand der Schweißlinse für eine Abkühlungszeit von 500 ms oder länger abgekühlt wird;

einen Erwärmungsprozess, bei dem der Rand der Schweißlinse und die Wärmeeinflusszone mit einem in Formel (1) gezeigten Stromwert It (kA) für eine in Formel (2) gezeigte Energiebeaufschlagungszeit Tt (ms) mit Energie beaufschlagt werden; und

einen Übergangsprozess, bei dem nach dem Erwärmungsprozess ein an den Rand der Schweißlinse und die Wärmeeinflusszone angelegter Energiebeaufschlagungsstrom kontinuierlich vom Stromwert It (kA) auf einen Stromwert Itm (kA) über eine in Formel (4) gezeigte Abwärts-Energiebeaufschlagungszeit Td (ms) reduziert wird und/oder einen Halteprozess, bei dem die Energiebeaufschlagung mit einem in Formel (3) gezeigten Stromwert Ita (kA) für eine in Formel (4) gezeigte Energiebeaufschlagungszeit Tta (ms) durchgeführt wird:

$$1,05 \ x \ Iw \ \leq \ It \ \leq \ 1,75 \ x \ Iw \ (1)$$

$$0 \ < \ Tt \ \leq \ 200 \ (2)$$

$$0,15 \ x \ It \ \leq \ Ita \ \leq \ 0,90 \ x \ It \ (3)$$

$$250 \ \leq \ Tt \ + \ Tta \ + \ Td \ (4)$$

wobei in den Formeln Iw der Stromwert (kA) im primären Energiebeaufschlagungsschritt ist;

It der Stromwert (kA) im Erwärmungsprozess im Nachwärmebehandlungsschritt ist;

Tt die Energiebeaufschlagungszeit (ms) im Erwärmungsprozess im Nachwärmebehandlungsschritt ist;

Ita der Stromwert (kA) im Halteprozess im Nachwärmebehandlungsschritt ist;

Td die Abwärts-Energiebeaufschlagungszeit (ms) im Übergangsprozess im Nachwärmebehandlungsschritt ist; und

Tta die Energiebeaufschlagungszeit (ms) im Halteprozess im Nachwärmebehandlungsschritt ist,

mit der Maßgabe, dass, wenn der Übergangsprozess nicht im Nachwärmebehandlungsschritt beinhaltet ist, Td in Formel (4) auf 0 ms gesetzt wird und dass, wenn der Halteprozess nicht im Nachwärmebehandlungsschritt beinhaltet ist, Tta in Formel (4) auf 0 ms gesetzt wird.

## Revendications

1. Élément automobile comprenant une soudure par points par résistance formée par soudage par points par résistance d'une pluralité de tôles d'acier comportant au moins une tôle d'acier à haute résistance,

dans lequel la tôle d'acier à haute résistance présente une composition chimique contenant, en % massique,
C : 0,21 à 0,40 %,
Si : 1,0 à 1,9 %,
Mn : 2,0 à 3,6 %,
P : 0,05 % ou moins,
S : 0,004 % ou moins,
Al : 0,01 à 0,10 %, et
N : 0,010 % ou moins et
contenant en outre un ou deux éléments sélectionnés parmi Nb : 0,005 à 0,080 % et Ti : 0,005 à 0,080 %,
et, optionnellement, contenant en outre, en % massique, un ou deux ou plusieurs éléments sélectionnés parmi
V : 0,05 % ou moins,
Cr : 1,0 % ou moins,
Mo : 0,50 % ou moins,

Cu : 0,50 % ou moins,

Ni : 0,50 % ou moins,

Sb : 0,020 % ou moins,

B : 0,010 % ou moins,

Ca : 0,0050 % ou moins, et

REMs : 0,0050 % ou moins,

le reste étant constitué de Fe et d'impuretés accidentelles,

dans lequel les impuretés accidentelles comportent, optionnellement, Co : 0,05 % ou moins, Sn : 0,01 % ou moins, et Zn : 0,01 % ou moins,

dans lequel la tôle d'acier à haute résistance présente une résistance à la traction de 1 400 MPa ou plus,

dans lequel, lorsqu'une position située à 50 $\mu$m d'un bord d'un noyau de soudure de la soudure par points par résistance en direction d'une partie centrale du noyau de soudure le long d'une surface d'affleurement de tôle d'acier est désignée comme point A, et une position située à 200 $\mu$m du bord du noyau de soudure en direction d'une zone affectée thermiquement le long de la surface d'affleurement de tôle d'acier est désignée comme point B, la microstructure d'une région s'étendant à partir du point A vers le point B à l'intérieur du noyau de soudure et de la zone affectée thermiquement est une microstructure composite contenant de la ferrite à une fraction volumique de 1 à 30 %, de la martensite à une fraction volumique de 1 à 50 %, et de la martensite revenue à une fraction volumique de 20 % ou plus,

dans lequel la région s'étendant à partir du point A vers le point B à l'intérieur du noyau de soudure et de la zone affectée thermiquement est une région entourée d'une ligne droite perpendiculaire à la surface d'affleurement de tôle d'acier au niveau du point A et d'un arc passant à travers le point B avec le centre situé au niveau du point A,

dans lequel, lorsqu'une ou deux ou plusieurs éléments parmi de la bainite, de l'austénite résiduelle et de la perlite se forment en tant que structures résiduelles dans la microstructure de la région s'étendant à partir du point A vers le point B à l'intérieur du noyau de soudure et de la zone affectée thermiquement, la fraction volumique de bainite est de 10 % ou moins, 0 % inclus, la fraction volumique d'austénite résiduelle de 10 % ou moins, 0 % inclus, et la fraction volumique de perlite est de 3 % ou moins, 0 % inclus, dans lequel la fraction volumique totale de structures résiduelles de 23 % ou moins, 0 % inclus,

dans lequel, dans la région s'étendant à partir du point A vers le point B, la densité en nombre moyenne de grains de précipité à base de Nb présentant un diamètre de grain inférieur à 0,09 $\mu$m et de grains de précipité à base de Ti présentant un diamètre de grain inférieur à 0,09 $\mu$m est de 10 grains ou plus par 100 $\mu$m$^2$ dans une section transversale de tôle, et

dans lequel la microstructure de la région s'étendant à partir du point A vers le point B à l'intérieur du noyau de soudure et de la zone affectée thermiquement, ainsi que la densité en nombre moyenne de grains de précipité à base de Nb présentant un diamètre de grain inférieur à 0,09 $\mu$m et de grains de précipité à base de Ti présentant un diamètre de grain inférieur à 0,09 $\mu$m, sont mesurées par les procédés décrits dans la description.

2. Élément automobile selon la revendication 1, dans lequel la tôle d'acier à haute résistance présente une microstructure contenant de l'austénite résiduelle à une fraction volumique de 5 à 30 %.

3. Élément automobile selon la revendication 1 ou 2, dans lequel la tôle d'acier à haute résistance présente une couche revêtue sur une surface de celle-ci.

4. Élément automobile selon la revendication 3, dans lequel la couche revêtue est une couche galvanisée ou une couche recuite par galvanisation.

5. Procédé de soudage par points par résistance pour l'élément automobile selon l'une quelconque des revendications 1 à 4, le procédé comprenant,

lorsqu'un ensemble de tôles comportant la pluralité de tôles d'acier comportant l'au moins une tôle d'acier à haute résistance qui sont empilées ensemble est maintenu entre une paire d'électrodes de soudage et assemblé en mettant sous tension l'ensemble de tôles sous l'application d'une force de soudage :

une étape de mise sous tension primaire consistant à mettre sous tension l'ensemble de tôles à une valeur de courant Iw (kA) afin de former ainsi le noyau de soudure ; et une étape de post-traitement thermique consistant à soumettre le noyau de soudure et la zone affectée thermiquement à un post-traitement thermique,

dans lequel l'étape de post-traitement thermique comporte :

un processus de refroidissement consistant à refroidir le bord du noyau de soudure pendant une durée de refroidissement de 500 ms ou plus ;

un processus de chauffage consistant à mettre sous tension le bord du noyau de soudure et la zone affectée thermiquement à une valeur de courant It (kA) indiquée dans la formule (1) pendant une durée de mise sous tension Tt (ms) indiquée dans la formule (2) ; et

un processus de transition dans lequel, après le processus de chauffage, un courant de mise sous tension appliqué au bord du noyau de soudure et à la zone affectée thermiquement est continuellement réduit de la valeur de courant It (kA) à une valeur de courant Itm (kA) pendant une durée de mise sous tension Td (ms) en pente descendante indiquée dans la formule (4), et/ou un processus de maintien consistant à effectuer la mise sous tension à une valeur de courant Ita (kA) indiquée dans la formule (3) pendant une durée de mise sous tension Tta (ms) indiquée dans la formule (4) :

$$1,05 \text{ x } Iw \leq It \leq 1,75 \text{ x } Iw \quad (1)$$

$$0 < Tt \leq 200 \quad (2)$$

$$0,15 \text{ x } It \leq Ita \leq 0,90 \text{ x } It \quad (3)$$

$$250 \leq Tt + Tta + Td \quad (4)$$

dans lequel, dans les formules, Iw est la valeur de courant (kA) à l'étape de mise sous tension primaire ;

It est la valeur de courant (kA) dans le processus de chauffage à l'étape de post-traitement thermique ;

Tt est la durée de mise sous tension (ms) dans le processus de chauffage à l'étape de post-traitement thermique ;

Ita est la valeur de courant (kA) dans le processus de maintien à l'étape de post-traitement thermique ;

Td est la durée de mise sous tension (ms) en pente descendante dans le processus de transition à l'étape de post-traitement thermique ; et

Tta est la durée de mise sous tension (ms) dans le processus de maintien à l'étape de post-traitement thermique,

sous réserve que, lorsque le processus de transition n'est pas inclus dans l'étape de post-traitement thermique, Td dans la formule (4) soit fixé à 0 ms et que, lorsque le processus de maintien n'est pas inclus dans l'étape de post-traitement thermique, Tta dans la formule (4) soit fixé à 0 ms.

EP 4 316 718 B1

# FIG. 1

# FIG. 2

# FIG. 3

# FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6194765 B
- JP 6558443 B
- US 2016067814 A

**Non-patent literature cited in the description**

- **2000**. X-ray Diffraction Handbook. *Rigaku Corporation*, 26, 62-64